# EUROPEAN PATENT APPLICATION

(11) **EP 1 656 830 A1**
(43) Date of publication of application: **17.05.2006**
(21) Application number: 05024683.4
(22) Date of filing: 11.11.2005
(51) Int. Cl.: A01K 63/04

(54) **Filter arrangement with power shut-off**

(30) Priority: 15.11.2004 US 628249 P
(71) Applicant: Tetra Holding (US), Inc., Blacksburg Virginia 24060 (US)
(72) Inventor: Carley, Joseph, Blacksburg 24060 Virginia (US); Agresta, Mark, Blacksburg 24060 Virginia (US)
(74) Representative: Miller, Andreas

(57) **Abstract**

An aquarium filter including a filter housing (12), a filter cartridge (16) positionable within the filter housing, and a pump assembly (14). The aquarium filter also includes an indicator arrangement (18) including a first device (20) and a second corresponding device (30) that interconnect to control operation of the pump assembly.

## Description

### Technical Field

This disclosure relates generally to methods and devices for filtering aquarium water. More particularly, this disclosure relates to a filter housing arrangement and methods related to operation and use of the filter housing arrangement.

### Background

To maintain an ecological balance within an aquarium, it is necessary to keep the water in the aquarium clean. Cleaning is often accomplished by pumping water from the aquarium to a filter device, filtering the water through filter media or a filter cartridge, and returning the filtered water to the aquarium.

As aquarium water passes through the filter cartridge, various particulates trapped by the media can gradually slow or block the passage of water through the cartridge. Thus, it is necessary for the user to periodically remove and replace the filter cartridge.

During such maintenance, the filter cartridge is typically removed from the filter housing while the filter housing is running or circulating water. That is, users often do not first unplug or power down the pump of the filter before removing the filter cartridge. Rather, the pump continues to circulate water through the filter housing while the filter cartridge is being removed.

As the filter cartridge is being removed, some debris remains suspended in the filter chamber. If the pump is left running during removal of the filter cartridge, the debris is then dispersed back into the aquarium. In addition, if the pump is left running during removal of the filter cartridge, the circulation of water generated by the pump can cause debris that has accumulated on the cartridge to loosen and fall in the water flow that is being circulated back into the aquarium.

In general, improvement has been sought with respect to such arrangements, generally to accommodate ease of use and reduce filtration inefficiencies due to filter maintenance procedures.

### Summary

In one aspect, the present disclosure relates to a filter arrangement including a filter housing, a filter cartridge positionable within the filter housing, and a pump assembly arranged to pump water into the filter housing for filtration. The arrangement also includes an indicator arrangement having a first device that operatively interconnects to a second corresponding device. The pump assembly normally operates when the first and second devices are operatively interconnected, and ceases normal operation when the first and second devices are operatively disconnected.

In another aspect, the present disclosure relates to a filter cartridge for use in an aquarium filter. The filter cartridge includes a filter frame and filtration media. The cartridge further includes an indicating device disposed on at least one of the filter frame and the filtration media. The indicating device is configured to operatively interconnect to a corresponding device of the aquarium filter to control operation of the aquarium filter.

A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only, and are not restrictive of the claimed invention.

### Brief Description of the Drawings

FIG. 1 is a schematic representation of one filter arrangement in accord with the principles of the present disclosure;
FIG. 2 is a schematic representation of another filter arrangement in accord with the principles of the present disclosure;
FIG. 3 is a schematic representation of yet another filter arrangement in accord with the principles of the present disclosure; and
FIG. 4 is a schematic representation of still another filter arrangement in accord with the principles of the present disclosure.

### Detailed Description

Reference will now be made in detail to various features of the present disclosure that are illustrated in the accompanying drawings. Wherever possible, the same reference numbers will be used throughout the drawings to refer to the same or like parts.

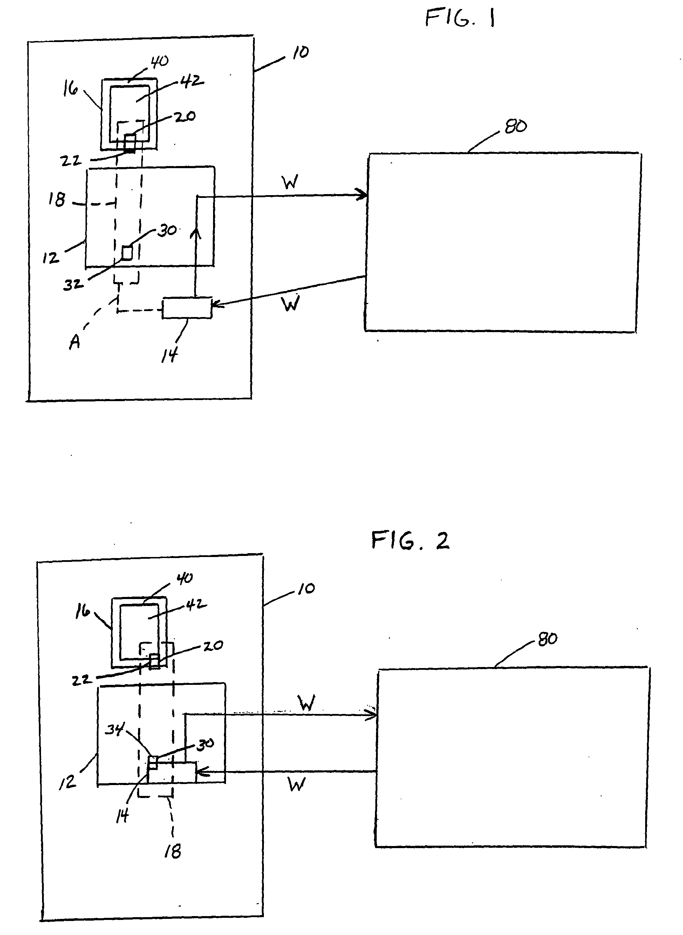

FIG. 1 schematically represents a filter arrangement 10 having features that are examples of how inventive aspects in accordance with the principles of the present disclosure may be practiced.

The filter arrangement 10 of the present disclosure generally includes a filter housing or box 12, an electric pump assembly 14, and a filter cartridge 16 positionable within the filter housing 12. The filter arrangement 10 can be a type of filter that mounts outside of an aquarium 80 or inside the aquarium. The pump assembly 14 can include a pump that is a separate unit from that of the filter housing 12 and is connected to the filter housing by tubes, or can include a pump having a pump housing that is integrally formed within the filter housing 12. The pump assembly 14 pumps water from the aquarium 80 into the filter housing 12 for filtration. The pump assembly 14 can include an air-type pump, or a pump having an impeller arrangement that either draws or impels water into the filter housing 12. After filtration, the filtered water is dispensed back into the aquarium 80. Arrows W in FIG. 1 generally represent this filtration cycle.

Preferably, the filter arrangement 10 of the present disclosure includes an indicator arrangement 18 that indicates to the pump assembly 14 whether to maintain normal operation or to power down. Normal operation includes operation whereby water is continuously circulated through the filter housing 12 for filtration. Normal operation also includes an intermittent water circulation cycle that circulates water through the filter housing 12 for filtration at predetermined intervals. Power down is intended to mean a state whereby normal operation is ceased.

The indicator arrangement 18 of the filter arrangement 10 includes a first device 20 that operatively interconnects with a second corresponding device 30. What is meant by operatively interconnects is that the first and second corresponding devices 20, 30 mechanically, magnetically, or electrically engaged or contacted one another to provide an indication to the pump assembly 14 to either maintain normal operation, or power down.

Referring still to FIG. 1, the first device 20 is a cartridge device 22 disposed on the filter cartridge 16. The second corresponding device 30 is a housing device 32 disposed on the filter housing 12. When the filter cartridge 16 is properly seated within the filter housing 12 (i.e. positioned in a seated position), the cartridge device 22 and the housing device 32 operatively interconnect to provide an indication to the pump assembly 14 to maintain normal operation. If the filter cartridge 16 is removed or not properly seated, the disconnection of the cartridge device 22 and the housing device 32 provides an indication to the pump assembly 14 to cease operation and power down until the operative interconnection is reestablished. By this arrangement, the pump assembly 14 powers down when the filter cartridge 16 is removed from the filter housing 12 so that debris suspended within the filter housing 12 is not pumped or dispensed into the aquarium 80.

In one embodiment of the filter arrangement 10 shown in FIG. 1, the cartridge device 22 may include, for example, a frame projection, and the corresponding housing device 32 may include a normally-open switching mechanism. The switching mechanism is electrically interconnected to the pump assembly 14 (shown by dashed line A). When the projection mechanically engages the switching mechanism, the switching mechanism closes an electrical circuit required for operation of the pump assembly 14. The indication in this event is the electrical communication needed to power the pump assembly. When the filter cartridge 16 is removed from the housing 12, the cartridge device 20 disengages the normally-open switching mechanism and the electrical circuit required for operation of the pump assembly 14 is broken. The pump assembly 14 thereby powers down.

Yet in another embodiment of the filter arrangement 10 shown in FIG. 1, the cartridge device 22 may include, for example, a magnet, and the corresponding housing device 32 may include a hall effect sensor. The hall effect sensor is electrically interconnected to the pump assembly 14 (shown by dashed line A). When the magnet is positioned in proper proximity of the hall effect sensor, the pump assembly 14 receives a signal or indication to maintain normal operation. When the filter cartridge 16 is removed from the housing, the magnet and the hall effect sensor are no longer operatively interconnected (i.e. magnetically interconnected) and the pump assembly 14 thereby powers down.

Referring still to FIG. 1, in one embodiment, the filter cartridge 16 includes a frame 40 and filter media 42 attached to or secured by the frame 40. One type of frame 40 and filter media 42 that can be used is disclosed U.S. Patent Nos. 5,053,125 and 6,692,637; although, other types of media and frame constructions can be used in accord with the principles disclosed. The first device 20 of the indicator arrangement 18 is disposed on at least one of the media 42 and the frame 40. The first device 20 may be secured by conventional fasteners to either or both of the filter media 42 and the frame 40, woven or sewn into the filter media 42, or integrally molded to the frame 40 of the filter cartridge 16, for example.

As can be understood, each of the specific embodiments of the first and second devices 20, 30 may be interchanged. That is, for example, the housing device 32 may include a magnet, and the cartridge device 22 may include a sensor. Preferably, the device located on the filter cartridge 16 is disposable, as it is intended that the filter cartridge 16 may also be disposable. Replacement filter cartridges 16 accordingly each include the cartridge device 32 so that normal pump operation resumes when the used filter cartridge is replaced.

Embodiments of the first device and the second corresponding device other than those previously discussed may include, for example, a magnetic reed switch or a micro switch. Also, the first and second devices may relate to a lever mechanism that disconnects an impeller of the pump assembly, or pulls a rotor of the pump assembly out of the pump's operating magnetic field. Still another embodiment of the first and second devices may include an electric switch that energizes and de-energizes a 120-volt motor through a step-down transformer. In this embodiment, the switch, motor and transformer can be submerged within the aquarium, as it is believed that low-voltage operation of the motor does not harm aquatic life.

Referring now to FIG. 2, an alternative embodiment of the filter arrangement 10 is schematically represented. In this embodiment, the second corresponding device 30 is a corresponding pump device 34. The pump device 34 may include similar device embodiments, such as the switching mechanism, the hall effect sensor, etc., as described with regards to the previous embodiment. In this filter arrangement 10 embodiment however, the pump assembly 14 is arranged in relation to the filter cartridge 16 such that operative interconnect is achieved directly between the filter cartridge 16 and the pump assembly 14, rather than the filter cartridge 16 and the filter housing 12.

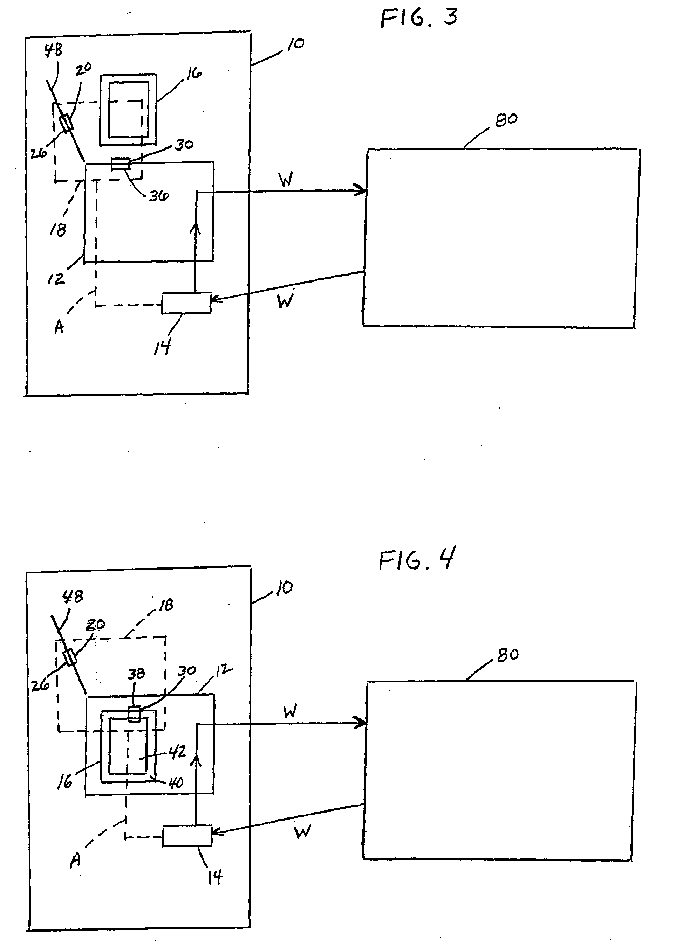

Referring now to FIG. 3, yet another alternative embodiment of the filter arrangement is schematically represented. In this embodiment the first device 20 is a cover device 26, and the second corresponding device is another corresponding housing device 36 similar to the previously described housing device 32. The cover device 26 is disposed on a cover 48 that encloses an interior volume of the filter housing 12. The housing device 36 is disposed on the filter housing 12 of the filter arrangement 10 adjacent to the cover 48. The cover device 26 and the housing device 36 may include similar embodiments as previously described with regards to the previous embodiments.

In this filter arrangement embodiment, when the cover 48 is closed or placed on top of the filter housing 12, the cover device 26 and the housing device 36 operatively interconnect to provide an indication to the pump assembly 14 to maintain normal operation. The cover 48 can include a hinged cover or a removable cover. If the cover 48 is opened or removed, disconnection of the cover device 26 and the housing device 36 provides an indication to the pump assembly 14 to cease operation and power down until the operative interconnection is reestablished. By this arrangement, the pump assembly 14 powers down when the cover 48 of the filter arrangement 10 is opened or removed so that maintenance of the filter arrangement 10 can be performed without operation of the pump assembly.

Referring now to FIG. 4, still another embodiment of the filter arrangement 10 is schematically represented. In this embodiment, the cover device 26 is configured to operatively interconnect with a different second corresponding device 30, in particular, a corresponding cartridge device 38. In this filter arrangement embodiment, when the cover 48 is closed or placed on top of the filter housing 12, the cover device 26 and the cartridge device 38 operatively interconnect to provide an indication to the pump assembly 14 to maintain normal operation. If the cover 48 is opened or removed, disconnection of the cover device 26 and the cartridge device 38 provides an indication to the pump assembly 14 to cease operation and power down until the operative interconnection is reestablished.

Each of the embodiments of the present filter arrangement 10 provides a shut-off or power-down feature that is automatic. In particular, the present filter arrangement 10 permits a user to remove and/or replace the filter cartridge 16 of the filter arrangement 10 without having to unplug the pump assembly 14, and without the worry of dispensing debris back into the aquarium 80.

In operation, when either the filter cartridge 16 is being removed, or the cover 48 is opened for access to the filter cartridge, the pump assembly 14 automatically powers down so that water circulation ceases. This contains any debris that is suspended in the filter housing 12, or that has fallen from the cartridge 16 during removal, within the filter housing 12. When a new filter cartridge is properly seated, or when the cover is subsequently closed or replaced after replacing the used filter cartridge, the pump assembly 14 resumes operation and at least a significant portion of the debris remaining in the filter housing 12 is filtered prior to dispensing the chamber water into the aquarium 80. The automatic feature of the present disclosure accommodates ease of use for the consumer by eliminating the need to unplug the pump assembly, and reduces filtration inefficiencies by ceasing circulation and dispersion of debris into the aquarium.

The above specification provides a complete description of the present invention. Since many embodiments of the invention can be made without departing from the spirit and scope of the invention, certain aspects of the invention reside in the claims hereinafter appended.

## Claims

1. A filter arrangement, comprising:
a) a filter housing configured to mount to an aquarium;
b) a filter cartridge positionable within the filter housing;
c) a pump assembly arranged to pump water into the filter housing for filtration; and
d) an indicator arrangement including a first device that operatively interconnects to a second corresponding device, wherein the pump assembly normally operates when the first and second devices are operatively interconnected, and wherein the pump assembly ceases normal operation when the first and second devices are operatively disconnected.

2. The arrangement of claim 1, wherein the first device is a cartridge device disposed on the filter cartridge, and the second corresponding device is disposed on one of the filter housing and the pump assembly.

3. The arrangement of claim 2, wherein the second corresponding device is a housing device disposed on the filter housing, and wherein the cartridge device and the housing device are operatively interconnected when the filter cartridge is positioned within the filter housing in a seated position.

4. The arrangement of claim 3, wherein the cartridge device and the housing device are operatively disconnected when the filter cartridge is removed from the filter housing.

5. The arrangement of claim 2, wherein the second corresponding device is a pump device disposed on the pump assembly, and wherein the cartridge device and the pump device are operatively interconnected when the filter cartridge is positioned within the filter housing in a seated position.

6. The arrangement of claim 5, wherein the cartridge device and the pump device are operatively disconnected when the filter cartridge is removed from the filter housing.

7. The arrangement of claim 2, wherein the cartridge device includes a structure that mechanically engages a switching mechanism of the second corresponding device to provide an operative interconnection between the cartridge device and the second corresponding device.

8. The arrangement of claim 2, wherein the cartridge device includes a magnet that provides an operative interconnection between the cartridge device and the second corresponding device when placed in proximity to a sensor of the second corresponding device.

9. The arrangement of claim 1, wherein the first device is a cartridge device disposed on the filter cartridge, and the second corresponding device is a cover device disposed on a cover that encloses an interior volume of the filter housing.

10. The arrangement of claim 9, wherein the cartridge device and the cover device are operatively interconnected when the filter cartridge is positioned within the filter housing in a seated position and the cover is positioned to enclose the interior volume of the filter housing.

11. The arrangement of claim 10, wherein the cartridge device and the cover device are operatively disconnected when the cover is opened or removed.

12. The arrangement of claim 9, wherein the cartridge device includes a structure that mechanically engages a switching mechanism of the cover device to provide an operative interconnection between the cartridge device and the cover device.

13. The arrangement of claim 9, wherein the cartridge device includes a magnet that provides an operative interconnection between the cartridge device and the cover device when placed in proximity to a sensor of the cover device.

14. A filter cartridge for use in an aquarium filter, the filter cartridge including:
a) a filter frame;
b) filtration media; and
c) an indicating device disposed on at least one of the filter frame and the filtration media, the indicating device being configured to operatively interconnect to a corresponding device of the aquarium filter to control operation of the aquarium filter.

15. The cartridge of claim 14, wherein the indicating device is a magnetic switch.

16. The cartridge of claim 14, wherein the indicating device is a magnet that operatively interconnects to a hall effect sensor of the corresponding device.

17. The cartridge of claim 14, wherein the indicating device is a micro switch.

18. The cartridge of claim 14, wherein the indicating device is a projection arranged to engage a switching mechanism of the corresponding device.
